# EUROPÄISCHE PATENTSCHRIFT

(11) **EP 1 414 663 B1**
(45) Veröffentlichungstag und Bekanntmachung des Hinweises auf die Patenterteilung: **04.05.2005**
(21) Anmeldenummer: 02764661.1
(22) Anmeldetag: 09.07.2002
(51) Int. Cl.: B60K 15/035, B65D 1/40, B60K 15/03

(54) **VERFAHREN ZUM BETRIEB EINES FAHRZEUG-KRYOTANK-SYSTEMS**
METHOD FOR OPERATING A MOTOR VEHICLE CRYOTANK SYSTEM
PROCEDE D'UTILISATION D'UN SYSTEME DE RESERVOIR CRYOGENIQUE A CARBURANT AUTOMOBILE

(30) Priorität: 09.08.2001 DE 10139136
(43) Veröffentlichungstag der Anmeldung: 06.05.2004
(73) Patentinhaber: Bayerische Motoren Werke Aktiengesellschaft, 80809 München (DE)
(72) Erfinder: FISCHER, Gregor, 85737 Ismaning (DE); TURINI, Jürgen, 82216 Stefansberg (DE); STRAUSS, Bernhard, 80809 München (DE)
(86) Internationale Anmeldenummer: PCT/EP2002/007649
(87) Internationale Veröffentlichungsnummer: WO 2003/013895

(56) Entgegenhaltungen:
- EP-A- 0 745 499
- EP-A- 0 781 958
- DE-A- 3 600 177
- DE-A- 19 853 097
- DE-A- 19 929 421
- US-A- 4 570 446
- US-B1- 6 260 587

## Beschreibung

Die Erfindung betrifft ein Verfahren zum Betrieb eines Fahrzeug- Kryotank-Systems, bspw. für flüssigen Wasserstoff, wobei Elemente des Tank-Systems, wie Leitungen, Ventile oder ähnliches und/oder ein Speicherbehälter für den Kraftstoff zumindest teilweise von einer Kapsel umgeben sind, deren Innenraum zumindest zeitweise entlüftet wird, nach dem Oberbegriff des Anspruchs 1. Zum bekannten Stand der Technik wird beispielshalber auf die DE 199 29 421 A1 sowie auf die gattungsbildende DE 198 53 097 A1 verwiesen.

Auf der Suche nach alternativen Antriebsenergien für Kraftfahrzeuge wird auch mit Flüssiggasen im allgemeinen und mit Wasserstoff im besonderen gearbeitet. Dabei wird ein Flüssiggas oder Wasserstoff in flüssiger Form in einem sog. Kryotank gespeichert, vgl. bspw. die DE 199 29 421 A1. Verschiedene Leitungen, in denen bspw. Ventile, aber auch Wärmetauscher oder allgemein fluidführende Elemente des Tank-Systems vorgesehen sind, führen in den Tank bzw. aus diesem heraus, so u.a. zu der mit dem Kraftstoff betriebenen Brennkraftmaschine. Eine weitere aus einem Kryotank herausführende Leitung kann der Abfuhr des sog. boil-off-Gases dienen.

Bei Kryotank-Systemen ist es üblich, diese genannten oder auch andere System-Elemente zumindest abschnittsweise oder teilweise zu kapseln, d.h. innerhalb einer sog. Kapsel anzuordnen, die um diese Elemente bzw. Teile derselben herum gebaut ist, wobei die Kapsel hauptsächlich dazu dient, Leckage-Gase des Tanksystems aufzufangen und ein Eindringen dieser Gase in den Fahrzeug-Innenraum zu verhindern. Gegebenenfalls kann diese Kapsel auch den Fahrzeug-Tank selbst umhüllen. Diese Kapsel, die mit Ausnahme einer ggf. absperrbaren Entlüftungsleitung aus unterschiedlichen Gründen gegenüber ihrer direkten Umgebung abgedichtet ist, kann sich dabei durchaus vom eigentlichen Tank bis zu der mit dem im Tank gespeicherten enthaltenen Kraftstoff zu versorgenden Brennkraftmaschine oder dgl. erstrecken.

Grundsätzlich können sich in der besagten Kapsel Gaskonzentrationen bilden, die unter ungünstigsten Umständen nicht unkritisch sind. Durch nicht immer vollständig vermeidbare Leckagen kann nämlich aus dem Kraftstofftank-System gasförmiger Kraftstoff in den Innenraum der Kapsel gelangen und sich dort ansammeln. Des weiteren besteht, wenn im Falle eines Kryotanks dessen Gase in einer Leitung durch die Kapsel hindurch abgeführt werden, an dieser extrem kalten Abführ-Leitung die Gefahr der Luftverflüssigung und daraus resultierend einer Sauerstoff-Anreicherung in der Kapsel. Die Bildung zündfähiger Gemische in der Kapsel kann somit nicht mit absoluter Sicherheit ausgeschlossen werden, und zwar auch dann nicht, wenn diese Kapsel entlüftet wird. Hierzu wird zum bekannten Stand der Technik auf die DE 198 53 097 A1 verwiesen, die einen gekapselten Kraftstoffbehälter mit Kapselentlüftung zeigt. Diese erfolgt mittels eines Spülmediums, bei welchem es sich - nachdem die aus der Kapsel abgeführten Gase dort der Brennkraftmaschine zugeführt und hierin unschädlich verbrannt werden, um den Ansaugluftstrom der Brennkraftmaschine, also um Umgebungsluft handelt.

In Verbindung mit einem Kraftstofftank für Benzin oder Dieselkraftstoff ist eine Kapsel-Spülung mit Umgebungsluft bzw. Sauerstoff möglich. Kritisch werden könnte dies jedoch in Verbindung mit Wasserstoff, der bevorzugt in einem Kryotanksystem gespeichert wird.

Daher soll hiermit ein verbessertes Verfahren zum Entlüften einer Kapsel eines Fahrzeug-Kryotanksystems nach dem Oberbegriff des Anspruchs 1 aufgezeigt werden (= Aufgabe der vorliegenden Erfindung).
Die Lösung dieser Aufgabe erfolgt bei einem Verfahren der eingangs genannten Art erfindungsgemäß dadurch, dass als Spülmedium das von einer das Fahrzeug antreibenden Brennkraftmaschine erzeugte Abgas verwendet wird. Vorteilhafte Weiterbildungen sind Inhalt der Unteransprüche; insbesondere ist hierbei auch ein Fahrzeug-Kryotank-System zur Durchführung des erfindungsgemäßen Verfahrens angegeben.

Was also die gewünschte Entlüftung der Kapsel betrifft, so kann diese mittels eines sog. Spülmediums durchgeführt werden, welches ein Druckgefälle herstellt. Die Verwendung eines Spülmedium gewährleistet, dass auch dann, wenn lediglich ein relativ geringes Druckgefälle bereit gestellt werden kann, das zuvor im Kapsel-Innenraum befindliche nicht ungefährliche Gas bzw. Gasgemisch sicher aus dem Innenraum herausgeführt, d.h. entfernt werden kann. Wenn dabei als Spülmedium ein inertes Gas zum Einsatz kommt, ist gewährleistet, dass keine unerwünschte chemische Reaktion angefacht wird, d.h. dass sich das durch das Druckgefälle abzuführende Gasgemisch sicher nicht entzünden kann. An einem Kraftfahrzeug, das mit einem Tank-System zur Versorgung der das Fahrzeug antreibenden Brennkraftmaschine versehen ist, ist bereits eine Quelle für ein solches inertes Gas vorhanden, und zwar in Form des von der Brennkraftmaschine ausgestoßenen Abgases.

Mit der zwangsweisen Entlüftung der Kapsel unter Benutzung des Abgases der das Fahrzeug antreibenden Brennkraftmaschine wird somit dafür gesorgt, dass die sich im Innenraum der Kapsel ansammelnden, teilweise nicht ungefährlichen Gase bzw. Gasgemische immer wieder aus der Kapsel entfernt werden und dabei solchermaßen weiterbehandelt werden, dass sich keine Probleme für die Umwelt bzw. die Umgebung ergeben. Beispielsweise kann das aus dem Zwischenraum abgeführte Gas im Rahmen seiner Entsorgung verbrannt werden, so dass lediglich die dabei entstehenden Abgase, die dann unschädlich sind, in die Umgebung gelangen. Alternativ kann das abgeführte Gas zur Entsorgung auch katalytisch oxidiert und somit ungefährlich gemacht werden, nachdem danach keine Entzündung dieses Gases im Luft-Sauerstoff mehr möglich ist.

Bevorzugt erfolgt die Entlüftung des genannten Kapsel-Innenraumes in Abhängigkeit zumindest einer Randbedingung zumindest im wesentlichen regelmäßig, um auszuschließen, dass sich - bspw. auch bei einer längeren Abstellphase des Kraftfahrzeuges - eine gefährliche Menge von Gasen im Kapselinnenraum ansammelt. In einfacher Weise kann die Entlüftung des Innenraumes zeitlich gesteuert durchgeführt werden, d.h. in regelmäßigen zeitlichen Abständen wird jeweils für eine gewisse Zeitdauer bspw. die beschriebene Spülung des Kapsel-Innenraumes mit dem Spülmedium, nämlich dem Abgas der Brennkraftmaschine durchgeführt. Alternativ kann die Kapsel-Entlüftung bei Vorliegen einer oder verschiedener bestimmter Gas-Konzentration(en) im Kapsel-Innenraum durchgeführt werden, wobei diese Konzentration(en) dann laufend geeignet ermittelt bzw. überwacht werden muss/müssen. Genau genommen ist dabei das Verhältnis der Sauerstoff-Konzentration zur Kraftstoffgas-Konzentration (bzw. in einem bevorzugten Anwendungsfall zur Wasserstoff-Konzentration) von Bedeutung. Insofern kann allgemein die besagte Entlüftung auch bei Erreichen einer bestimmten Sauerstoff-Konzentration im Kapsel-Innenraum durchgeführt werden.

Es wurde bereits erwähnt, dass das aus dem Kapsel-Innenraum abgeführte Gas bzw. Gas-Gemisch im Rahmen seiner Entsorgung verbrannt werden kann, so dass lediglich die dabei entstehenden Abgase, die dann unschädlich sind, in die Umgebung gelangen. Hierfür kann in einer Verbindungsleitung zwischen dem Kapsel-Innenraum und der Umgebung ein spezieller Brenner und in einer bevorzugten Ausführungsform ein sog. Boil-off-Brenner vorgesehen sein. An oder in einem Boil-off-Brenner erfolgt bekanntermaßen die Verbrennung der Boil-off-Gases eines Kryotanks. Die im Brenner entstehenden Abgase können dann einfach in die Umgebung abgegeben werden, ohne dass hieraus eine Gefahr entsteht. Im übrigen kann die soeben genannte Verbrennung bei Auswahl eines geeigneten Brennermaterials auch katalytisch erfolgen. Des weiteren kann die Zündung des Brenners ebenfalls katalytisch erfolgen. Diese katalytische Basis ermöglicht vorteilhafterweise eine Entsorgung ohne externen zusätzlichen Energieaufwand.

Ein Sonderfall eines Brenners wird durch die das Fahrzeug antreibende Brennkraftmaschine gebildet. In dieser findet ohnehin eine Verbrennung des Kraftstoffs bspw. des Wasserstoffgases statt. Nun ist nur noch das aus dem Kapsel-Innenraum entfernte Gasgemisch dieser bereits vorhandenen Brennkraftmaschine zusammen mit dem Verbrennungsgas zuzuführen, so dass - zumindest solange die Brennkraftmaschine betrieben wird - keine zusätzliche sog. Entsorgungsvorrichtung benötigt wird. Im übrigen kann ein Druckgefälle für einen Spülvorgang auch mittels einer Saugpumpe oder dgl. erzeugt werden. Alternativ oder zusätzlich kann in einer entsprechenden Ausgestaltungsform ein separater Boil-off-Brenner, bei dessen Betrieb ebenfalls Unterdruck entsteht, auch zum Spülen des Kapselinnenraumes genutzt werden, d.h. der Boil-off-Brenner kann nicht nur als Entsorgungsvorrichtung für das sich in der Kapsel ansammelnde Gasgemisch, sondern auch als Vorrichtung zur Erzeugung eines Druckgefälles zum Entfernen der anfallenden sog. Kapsel-Gase aus dem genannten Innenraum fungieren.

## Patentansprüche

1. Verfahren zum Betrieb eines Fahrzeug-Kryotank-Systems, bspw. für flüssigen Wasserstoff, wobei Elemente des Tank-Systems, wie Leitungen, Ventile oder ähnliches, und/oder ein Speicherbehälter für den Kraftstoff zumindest teilweise von einer Kapsel umgeben sind, deren Innenraum zumindest zeitweise entlüftet wird, und wobei zur Entlüftung des Kapsel-Innenraums mittels eines Spülmediums ein Druckgefälle erzeugt wird und dass das hierbei abgeführte Gas, das über unvermeidbare Leckage aus dem Tank-System in den Innenraum gelangt ist, derart weiterbehandelt und somit gezielt entsorgt wird, so dass keine Gefährdung für die Umgebung besteht,
**dadurch gekennzeichnet, dass** als Spülmedium das von einer das Fahrzeug antreibenden Brennkraftmaschine erzeugte Abgas verwendet wird.

2. Verfahren nach Anspruch 1,
**dadurch gekennzeichnet, dass** die Entlüftung in Abhängigkeit zumindest einer Randbedingung zumindest im wesentlichen regelmäßig erfolgt.

3. Verfahren nach Anspruch 2,
**dadurch gekennzeichnet, dass** die Entlüftung zeitlich gesteuert durchgeführt wird.

4. Verfahren nach Anspruch 2,
**dadurch gekennzeichnet, dass** die Entlüftung bei Erreichen einer bestimmten Gas-Konzentration im Kapsel-Innenraum durchgeführt wird.

## Claims

1. A method for operating a vehicle cryo tank system, for example for liquid hydrogen, wherein elements of the tank system, such as lines, valves or the like and/or a storage container for the fuel are at least partially surrounded by a capsule, the interior of which is vented at least from time to time, and wherein a pressure difference is produced to vent the capsule interior by means of a purging medium and that the gas thus removed, which has reached the interior via unavoidable leakage from the tank system, is further processed and therefore disposed of in a targeted manner such that there is no risk to the environment, **characterised in that** the exhaust gas produced by an internal-combustion engine driving the vehicle is used as the purging medium.

2. A method according to claim 1, **characterised in that** the venting takes place at least substantially regularly as a function of at least one boundary condition.

3. A method according to claim 2, **characterised in that** the venting is carried out in a time-controlled manner.

4. A method according to claim 2, **characterised in that** the venting is carried out on reaching a certain gas concentration in the capsule interior.

## Revendications

1. Procédé de gestion d'un système de réservoir cryogénique de véhicule automobile par exemple pour de l'hydrogène liquéfié, selon lequel les éléments du système de réservoir tels que des conduites, vannes ou analogues et/ou un réservoir accumulateur de carburant, sont au moins en partie entourés d'une capsule dont on évacue de temps en temps le volume intérieur, et pour évacuer le volume intérieur de la capsule, on crée une chute de pression pour un milieu de rinçage et le gaz ainsi évacué, arrivé par une fuite inévitable du système de réservoir jusque dans le volume intérieur, est traité puis éliminé de manière précise afin d'éviter tout risque pour l'environnement
**caractérisé en ce que**
le milieu de rinçage est le gaz d'échappement engendré par le moteur à combustion interne entraînant le véhicule.

2. Procédé selon la revendication 1,
**caractérisé en ce que**
l'évacuation se fait en fonction d'au moins une condition aux limites essentiellement de façon régulière.

3. Procédé selon la revendication 2,
**caractérisé en ce que**
l'évacuation est faite de manière commandée dans le temps.

4. Procédé selon la revendication 2,
**caractérisé en ce que**
l'évacuation est faite lorsqu'on atteint une certaine concentration de gaz dans le volume intérieur de la capsule.
